# EUROPÄISCHE PATENTSCHRIFT

(11) **EP 3 132 889 B1**
(45) Veröffentlichungstag und Bekanntmachung des Hinweises auf die Patenterteilung: **01.11.2017**
(21) Anmeldenummer: 16184581.3
(22) Anmeldetag: 17.08.2016
(51) Int. Cl.: B23Q 7/14, B23Q 11/08, B23Q 11/14

(54) **WERKZEUGMASCHINE ZUR PRÄZISIONSBEARBEITUNG VON WERKSTÜCKEN**
MACHINE TOOL FOR THE PRECISE MACHINING OF WORKPIECES
MACHINE-OUTIL DESTINEE A L'USINAGE DE PRECISION DE PIECES USINEES

(30) Priorität: 18.08.2015 DE 102015113609
(43) Veröffentlichungstag der Anmeldung: 22.02.2017
(73) Patentinhaber: Starrag GmbH, 09117 Chemnitz (DE)
(72) Erfinder: Brand, Matthias, 99846 Seebach (DE); Hilbert, Mareen, 09117 Chemnitz (DE); Kutscher, Stephan, 04655 Kohren-Sahlis (DE); Forst, Klaus, 09113 Chemnitz (DE)
(74) Vertreter: Rumrich, Gabriele

(56) Entgegenhaltungen:
- DE-B- 1 197 725
- DE-B4-102011 078 896

## Beschreibung

Die Erfindung betrifft eine Werkzeugmaschine zur Präzisionsbearbeitung von Werkstücken nach dem Oberbegriff des ersten Patentanspruchs. Eine solche Werkzeugmaschine ist z.B. aus der EP 0 614 724 A2 bekannt. Um eine hochpräzise Bearbeitung von Werkstücken in Werkzeugmaschinen zu gewährleisten sind verschiedene Maßnahmen zur thermischen Stabilisierung der an der Bearbeitung beteiligten Komponenten bekannt, mit welchen die Temperatur innerhalb der Werkzeugmaschine konstant gehalten wird bzw. mit welchen das Werkzeug vorgekühlt wird.

In der DE 10 2004 003 227 B4 beispielsweise wird ein Verfahren zur Temperierung des Arbeitsraumes einer Werkzeugmaschine offenbart, bei dem Abluft vom Arbeitsraum abgeführt und als temperierte Rückluft in den Arbeitsraum zurückgeführt wird. Mit diesem Verfahren geht ein hoher baulicher und technischer Aufwand für den Arbeitsraum der Werkzeugmaschine und für die Einrichtungen zur Durchführung des Verfahrens einher. Die DE 10 2013 224 649 A1 beschreibt eine Werkzeugmaschine zum Auftragsschweißen, bei der eine Werkzeugtemperiervorrichtung vorgesehen ist. Diese wird zwischen Werkstücktisch und Werkstückbasis eingeschoben. Das Werkstück wird mit seiner Unterseite auf die Temperiervorrichtung gesetzt und auf eine Temperatur von über 100°C oder darüber erwärmt. Für die spanende Präzisionsbearbeitung von Werkstücken ist diese Lösung nicht geeignet.

Die DE 20 2013 006 765 U1 betrifft eine Einrichtung zum Temperieren eines großen Bauteils einer Werkzeugmaschine, wie eines Maschinenständers, wobei auf der Oberfläche des Bauteils eine Temperierschale angeordnet ist, bestehend aus einer Mineralguss-Dichtschicht, einer offenporigen Mineralguss-Schicht und einer weiteren Mineralguss-Dichtschicht, wobei in der Mineralguss-Schicht ein Zulauf und ein Ablauf zum Durchfluss eines Wärme übertragenden Mediums angeordnet sind. Die Schale ist hier nachteilig starr, unflexibel und aus einem Teil gefertigt.

In der EP 1 405 695 A1 wird eine Klimatisierungseinrichtung für eine Werkzeugmaschine beschrieben, wobei das Gestell der Maschine im Inneren eines Behältnisses angeordnet ist. Bauteile der Maschine, welche gegenüber dem Gestell unbeweglich angeordnet sind, werden über von einer Klimatisierungsmaschine klimatisierte Luftströme temperiert. Bauteile der Maschine, welche gegenüber dem Gestell beweglich angeordnet sind, wie beispielsweise der Schlitten, werden über Kühlkanäle durch eine Klimatisierungsflüssigkeit gekühlt. Das Behältnis, welches das Gestell der Maschine umgibt, ist aus Platten gefertigt, welche sich durch eine hohe thermische Isolierung auszeichnen. Nachteilig sind hier der aufwendige konstruktive Aufbau zur Gewährleistung der Kühlung, sowie die eingeschränkte Flexibilität des isolierenden Behältnisses durch die Verwendung starrer Platten.

In der Druckschrift DE102011078896B4 wird ein vorgekühltes Werkzeug vorgeschlagen. Das verhindert aber nicht, dass durch erwärmte Werkstücke das Bearbeitungsergebnis negativ beeinflusst wird.

Die teilweise sehr aufwendigen Maßnahmen der Temperierung der Werkzeugmaschine, deren Kühl-/Schmierstoffmittel und der Bearbeitungswerkzeuge gewährleisten teilweise bei einer hochpräzisen Bearbeitung ein nur eingeschränktes Bearbeitungsergebnis, da das Werkstück beim Zuführen in die Bearbeitungsposition eine zu hohe Temperatur aufweist und dadurch wiederum die Gefahr besteht, dass das bearbeitete Werkstück hinsichtlich seiner Toleranzen für den Einsatzfall ungenügend ist.

Es sind Lösungen bekannt, bei welchen das Werkstück abgekühlt wird. In der Druckschrift DE 696 21 004 T2 wird vorgeschlagen, Eis als Spannmittel z.B. an Stelle einer Magnetspannplatte einzusetzen. Dieses Spannen ist jedoch für die Präzisionsbearbeitung ungeeignet, weil das Werkstück ungleichmäßig temperiert wird und sich verzieht.

Aus der Druckschrift DE 1 197 725 V wird vorgeschlagen, das Werkstück mit -40°C tiefzukühlen. Damit wird beabsichtigt, bei der Bearbeitung Kühlschmierstoff einzusparen und die Bearbeitungswärme durch die gespeicherte Kälte des Werkstückes abzuführen. Abgesehen davon, dass dann Schwierigkeiten bei der Späneentsorgung auftreten, kann das sehr stark auf Minusgrade abgekühlte Werkstück jedoch bei Einsatzbedingungen bei Raumtemperatur und darüber unerwünschte Toleranz- und Lageabweichungen aufweisen.

Die beschriebenen Maßnahmen zielen auf eine Temperierung der Maschine ab, eliminieren jedoch keinen Verzug des Werkstückes auf Grund von Temperaturänderung desselben während der Bearbeitung.

Aufgabe der Erfindung ist es, eine Werkzeugmaschine zur Präzisionsbearbeitung von Werkstücken zu entwickeln, mit welcher eine Verbesserung der Genauigkeit der Präzisionsbearbeitung von Werkstücken, insbesondere bei spanender Bearbeitung mit geometrisch bestimmter Schneide wie Fräsen, Bohren, Reiben, Drehen möglich ist.

Diese Aufgabe wird mit den kennzeichnenden Merkmalen des ersten Patentanspruchs gelöst. Vorteilhafte Ausgestaltungen ergeben sich aus den Unteransprüchen.

Die Werkzeugmaschine zur Präzisionsbearbeitung von Werkstücken weist einen Rüstplatz zur Bereitstellung des Werkstücks, eine Bearbeitungsposition zur Bearbeitung des Werkstücks sowie Handhabungsmittel, durch welche das Werkstück vom Rüstplatz in die Bearbeitungsposition überführbar ist, auf, wobei die Werkzeugmaschine erfindungsgemäß im Bereich des Rüstplatzes eine Temperiervorrichtung mit einer Umhausung aufweist, welche das Werkstück (W) zumindest bereichsweise umhaust und das die Temperiervorrichtung Mittel zur Einstellung der Temperatur des Werkstücks auf eine vorgegebene Temperatur oder einen Temperaturbereich aufweist.
Die Temperiervorrichtung ist dazu mit wenigstens einem Kühlaggregat gekoppelt mit welchem als Mittel zur Einstellung der Temperatur des Werkstücks temperiertes Medium, insbesondere Kühlmedium, in den Innenraum der Umhausung leitbar ist. Bevorzugt wird als Medium Luft oder ein anderes geeignetes Medium verwendet.

Die Temperiervorrichtung weist vorteilhafter Weise wenigstens einen Temperatursensor zur Erfassung der Werkstücktemperatur und/oder der Temperatur in der Temperiervorrichtung auf.
Alternativ kann auch das Kühlaggregat Mittel zur Einstellung und/oder Messung der Temperatur des Mediums bzw. Kühlmediums aufweisen.
Am Rüstplatz wird das dort positionierte Werkstück zumindest teilweise durch die Umhausung der Temperiervorrichtung umhaust. Von dem Kühlaggregat wird das Medium (bevorzugt Luft) dem Innenraum der Umhausung, in dem sich das Werkstück befindet, über eine geeignete Leitung zugeführt, dadurch der Raum in der Umhausung der Temperiervorrichtung bevorzugt abgekühlt und dadurch auch die Temperatur des umhausten Werkstücks auf die gewünschte Temperatur eingestellt, bevorzugt gekühlt. Dabei weist die Umhausung der Temperiervorrichtung eine umfangsseitig und oben geschlossene Wand auf und besitzt keinen Boden. Die Umhausung ist somit in der Art einer bodenseitig offenen Glocke bzw. eines Gehäuses ausgebildet und weist einen nach unten offenen Hohlraum für die Aufnahme des Werkstücks auf. Die Umhausung ist beispielsweise an einer Linearführung höhenverstellbar angeordnet und mit dieser über das auf dem Rüstplatz positionierte Werkstück fahrbar und nach unten absenkbar und wieder anhebbar an der Linearführung aufgenommen.
Die Temperiervorrichtung ist vorteilhafter Weise mit einer Steuerung der Werkzeugmaschine gekoppelt.
Selbstverständlich weist die Temperiervorrichtung bzw. deren Umhausung entsprechende Anschlüsse für die Stromversorgung, die Zuführung des über das Kühlaggregat bereitgestellten Mediums und die Kopplung mit der Maschinensteuerung auf.

Durch die Temperierung des Werkstückes ist es möglich, eine Verbesserung der Genauigkeit der Präzisionsbearbeitung, insbesondere bei Bearbeitung mit geometrisch bestimmter Schneide wie Fräsen, Bohren, Reiben, Drehen auf Bearbeitungszenten zu realisieren.

Die Werkzeugmaschine, insbesondere ein Bearbeitungszentrum mit einer Werkstückwechseleinrichtung ist dabei erstmalig am Bereitstellungsplatz / Rüstplatz mit einer Temperiervorrichtung ausgestattet, mit dem die Temperatur des Werkstückes vor dessen Bearbeitung auf eine vorgewählte Temperatur einstellbar ist.
Vorteilhafterweise wird dafür eine gesteuerte Kühleinrichtung mit Abschaltung bei Erreichen der gewählten Temperatur eingesetzt.

Zur Bearbeitung wird das Werkstück zuerst im Bereich eines Rüstplatzes der Werkzeugmaschine positioniert und anschließend einer Bearbeitungsposition innerhalb eines Arbeitsraumes der Werkzeugmaschine zugeführt und dabei das Werkstück zuerst in seiner am Rüstplatz befindlichen Position auf eine vorgegebene Temperatur temperiert und nach Erreichen dieser Temperatur in die Bearbeitungsposition verbracht.
Die Temperierung des Werkstückes vor der Bearbeitung erfolgt vorteilhafterweise
auf die Temperatur, welche in einem Messraum (meist 18°C bis 20°C) und/oder im späteren Anwendungsumfeld herrscht.

Dadurch kann die Werkstückqualität insbesondere bei der spanenden Präzisionsbearbeitung verbessert werden. Meist liegt die Hallentemperatur, in welcher das Werkstück vor der Bearbeitung gelagert wird, über diesen vorgenannten Temperaturen, so dass es mit der Temperiervorrichtung am Rüstplatz z.B. auf 20°C gekühlt / temperiert wird. Es ist jedoch auch möglich, dass bei Hallentemperaturen, die beispielsweise im Winter unter 18 bis 20°C liegen, das Werkstück mit der Temperiervorrichtung erwärmt wird.
Um das Werkstück auf eine vorgegebene Temperatur zu bringen, wird das am Rüstplatz positionierte Werkstück, welches beispielsweise auf eine Palette aufgespannt ist, zuerst durch die Temperiervorrichtung zumindest teilweise umhaust und anschließend die Temperatur des Werkstücks mittels der Temperiervorrichtung auf die vorgegebenen Temperatur eingestellt und dass Werkstück gekühlt oder erwärmt.

Die Temperiervorrichtung weist dabei eine Messeinrichtung zur Bestimmung der Temperatur/Körpertemperatur des Werkstücks auf und ist vorteilhafter Weise mit der Steuerung der Werkzeugmaschine gekoppelt. Die Steuerung gibt die Zuführung des Werkzeuges vom Rüstplatz an die Bearbeitungsposition erst frei, wenn die Temperatur des Werkstücks die vorgegebene Temperatur erreicht hat bzw. sich in einem vorgegebenen Temperaturbereich befindet.
Dann schaltet sich die Temperiervorrichtung ab und die Umhausung wird vom Werkstück entfernt, welches dann aufgespannt auf die Palette an die Bearbeitungsposition eingewechselt wird. Bevorzugt wird das Werkstück am Rüstplatz in der Temperiervorrichtung auf eine Temperatur eingestellt, welche in einem Messraum und/oder in einem Anwendungsumfeld des Werkstückes herrscht.

Die Erfindung wird nachfolgend an einem Ausführungsbeispiel und einer zugehörigen Zeichnung näher erläutert. Es zeigen:
- Figur 1: eine dreidimensionale Darstellung einer Werkzeugmaschine mit einem Rüstplatz zur Bereitstellung eines Werkstückes,
- Figur 2: Draufsicht gem. Figur 1,
- Figur 3: eine Temperiervorrichtung mit quadratischem Querschnitt,
- Figur 4: eine Temperiervorrichtung mit rundem Querschnitt.

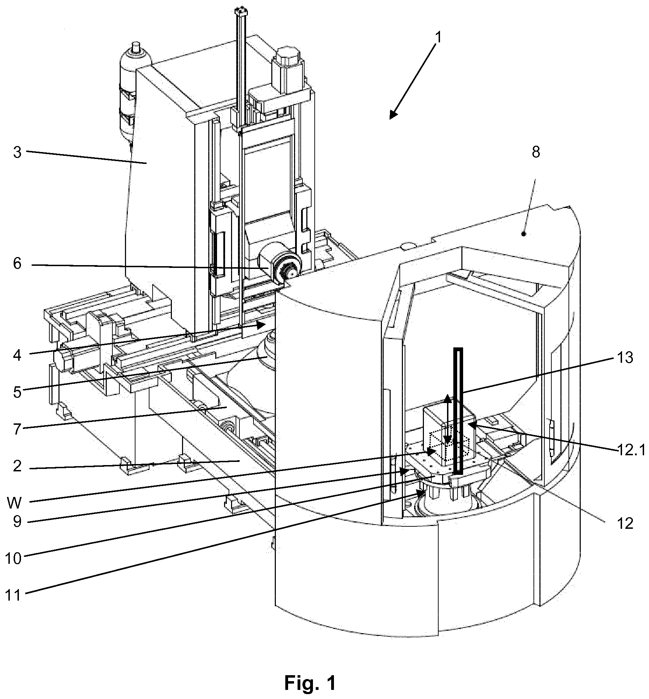

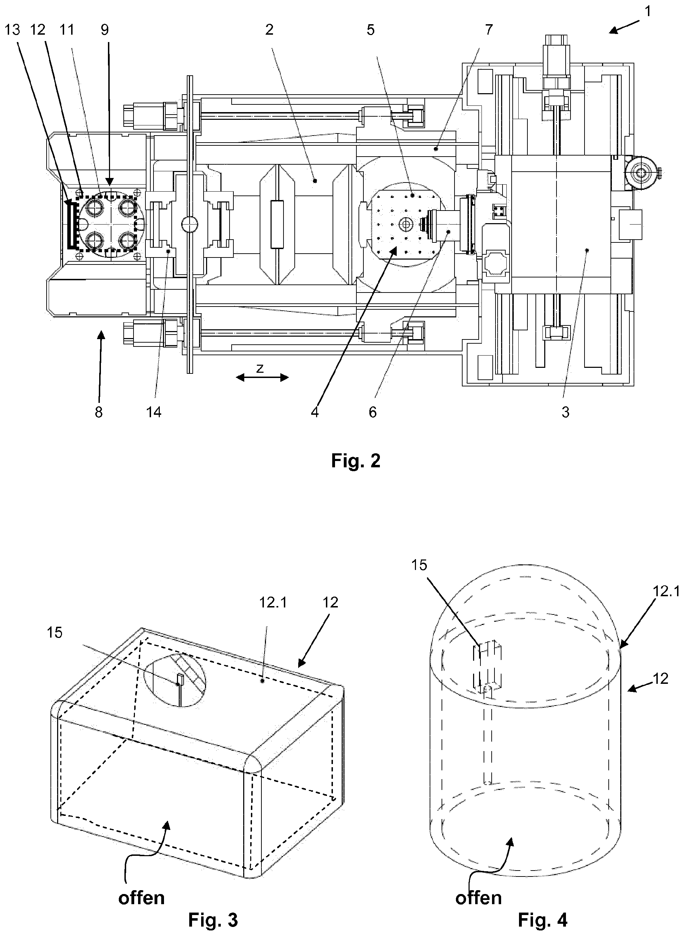

In den Figuren 1 und 2 ist eine Werkzeugmaschine 1 bzw. ein Bearbeitungszentrum zum Fräsen und Bohren dargestellt, welches ein Maschinenbett 2 und einen Maschinenständer 3 aufweist sowie mit einer Bearbeitungsposition 4 mit einem NC-Drehtisch 5 und einer Arbeitsspindel 6 zur Aufnahme und zum Antrieb des Bearbeitungswerkzeuges (nicht dargestellt) aufweist. Der NC-Drehtisch 5 ist hier über einen Z-Schlitten 7 in Z-Richtung verfahrbar. Die Werkzeugmaschine 1 weist in einer vom Arbeitsraum abgetrennten Werkstückwechseleinrichtung 8 einen Rüstplatz 9 auf, an dem ein zu bearbeitendes Werkstück (nicht dargestellt) positioniert wird, während ein anderes Werkstück bearbeitet wird.
Am Rüstplatz 9 wird das zu bearbeitende Werkstück W, welches hier gestrichelt angedeutet ist, auf eine Palette 10 aufgespannt (Figur 1) und mit dieser Palette 10 auf einem Unterbau 11 in der Werkstückwechseleinrichtung 8 aufgenommen (in Figur 2 ist der Unterbau 11 dargestellt ohne Palette 10 und Werkstück W).
Die Paletten 10 tragen dabei je eine Vorrichtung zum Spannen des Werkstücks W, die hier nicht dargestellt ist. Aus Figur 1 ist erkennbar, dass über das gestrichelt angedeutete Werkstück W die Umhausung 12.1 der Temperiervorrichtung 12 gesetzt wurde. Diese umschließt das Werkstück W umfangsseitig und nach oben und sitzt mit ihrer nicht bezeichneten Unterseite auf der Palette 10 auf.
Am Rüstplatz 9, auch als Spann- oder Bereitstellungsplatz bezeichnet, wird das zur Bearbeitung bereitgestellte Werkstück W mittels der Temperiervorrichtung 12 auf die gewünschte Temperatur temperiert. Die Umhausung 12.1 der Temperiervorrichtung 12 kann über eine angedeutete Linearführung 13 vertikal verfahren werden. Die Umhausung 12.1 befindet sich dabei zuerst in einer nach oben gefahrenen Position und wird nach unten abgesenkt (siehe Fig. 1), wenn das Werkstück W am Rüstplatz 9 positioniert wurde, worauf die Temperierung / Kühlung des Werkstücks W auf die erforderliche Temperatur erfolgt.

Temperierung heißt in erster Linie Kühlen, da in der Regel die Umgebungstemperatur zu hoch ist. Es kann zu Wartezeiten bis zum Erreichen der gewünschten Temperatur kommen. Das wird zu Gunsten der erhöhten Genauigkeit der Bearbeitung in Kauf genommen. In vielen Fällen kommt es darauf an, nur eine geringe Teileanzahl zu fertigen, dafür aber sehr genau.

Nachdem das Werkstück W mittels der Temperiervorrichtung 12 auf die gewünschte Temperatur gekühlt oder auch erwärmt wurde, wird die Umhausung 12.1 der Temperiervorrichtung 12 von diesem entfernt und das Werkstück W vom Rüstplatz 9 in der Werkstückwechseleinrichtung 8 zur Bearbeitungsposition gebracht. Dafür wird ein Palettenwechsler 14 (siehe Fig. 2) eingesetzt.

Die Umhausung 12.1 der Temperiervorrichtung 12 kann gemäß Figur 3 eine im Wesentlichen gehäuseartige nach unten offene Kastenform aufweisen oder gem. Figur 4 eine gehäuseartige nach unten offene zylinderförmige Form. Auf jeden Fall ist es vorteilhaft, wenn die Umhausung 12.1 umfangsseitig und oben geschlossen ausgeführt ist und einen nicht bezeichneten nach unten offenen Hohlraum zur Aufnahme des hier nicht dargestellten Werkstücks aufweist. Die Umhausung 12.1 wird bevorzugt von oben über das Werkstück W gestülpt und sitzt mit ihrer Unterseite auf der Palette 10 (s. Fig. 1) auf. Bei beiden Varianten weist die Temperiervorrichtung 12 wenigstens einen Temperaturfühler 15 auf, mit welchem die Temperatur im Innenraum der Umhausung 12.1 und/oder die Temperatur des Werkstücks erfassbar ist.

Es besteht auch die Möglichkeit, dass zusätzlich oder separat zum Temperaturfühler ein Infrarotmessgerät zur Temperaturbestimmung des Werkstücks eingesetzt wird.
Nach erreichen einer vorgegebenen Temperatur des Werkstücks wird die Umhausung entfernt und das temperierte Werkstück der Bearbeitungsposition zugeführt.

Weiterhin besteht eine Möglichkeit darin, dass nur die Temperatur im Innenraum der Umhausung 12.1 gemessen wird. Hat diese einen vorgegebenen Wert erreicht und befindet sich das Werkstück über eine bestimmte Zeit in der Temperiervorrichtung 12 ist davon auszugehen, dass das Werkstück die gewünschte Temperatur aufweist. Das dafür erforderliche Zeitfenster kann ggf. über Vorversuche ermittelt werden.

Alternativ kann auch nur die Temperatur des Mediums über das Kühlaggregat eingestellt werden, das Medium (Kühlmedium dem Innenraum der Umhausung zugeführt werden und das Werkstück über eine vorgegebene Verweildauer in der Umhausung verbleiben, wenn beispielsweise die werkstückspezifische Verweildauer bei einer bestimmten Temperatur des Mediums bis zum Erreichen der gewünschten Werkstücktemperatur in Vorversuchen oder über Berechnungen ermittelt wurde.

In diesem Fall kann unter Umständen auf den/die Temperatursensoren zur Erfassung der Temperatur in der Umhausung und/oder der Erfassung der Werkstücktemperatur verzichtet werden.

Das Werkstück wird zur Erzielung der geforderten Temperatur vollständig oder nahezu vollständig umhaust, unten durch die Palette, umfangsseitig und oben durch die Umhausung der Temperiervorrichtung.
Der im Wesentlichen geschlossene Raum, in dem sich das Werkstück befindet, wird nun durch das über das Kühlaggregat zugeführte Medium auf die gewünschte Temperatur gebracht, wodurch auch das Werkstück die gewünschte Temperatur annimmt.
Weist das Werkstück die erforderliche Temperatur auf, kann dieses nach der Entfernung der Temperiervorrichtung mittels des Palettenwechslers 14 in die Bearbeitungsposition 4 verbracht werden.

### Bezugszeichenliste

- 1: Werkzeugmaschine
- 2: Maschinenbett
- 3: Maschinenständer
- 4: Bearbeitungsposition
- 5: NC-Drehtisch
- 6: Arbeitsspindel
- 7: Z-Schlitten
- 8: Werkstückwechseleinrichtung
- 9: Rüstplatz
- 10: Palette
- 11: Unterbau
- 12: Temperiervorrichtung
- 12.1: Umhausung
- 13: Linearführung
- 14: Palettenwechsler
- 15: Temperaturfühler
- W: Werkstück

## Patentansprüche

1. Werkzeugmaschine zur Präzisionsbearbeitung eines Werkstücks (W), wobei die Werkzeugmaschine (1) einen Rüstplatz (9) zur Bereitstellung des Werkstücks (W) und eine Bearbeitungsposition (4) zur Bearbeitung des Werkstücks (W) aufweist, sowie mit Handhabungsmitteln, durch welche das Werkstück (W) vom Rüstplatz (9) in die Bearbeitungsposition (4) überführbar ist, **dadurch gekennzeichnet, dass** die Werkzeugmaschine (1) im Bereich des Rüstplatzes (9) eine Temperiervorrichtung (12) mit einer Umhausung (12.1) aufweist, welche das Werkstück (W) zumindest bereichsweise umhaust und dass die Temperiervorrichtung (12) Mittel zur Einstellung der Temperatur des Werkstücks (W) auf eine vorgegebene Temperatur oder einen Temperaturbereich aufweist.

2. Werkzeugmaschine nach Anspruch 1, **dadurch gekennzeichnet, dass** die Temperiervorrichtung (12) mit wenigstens einem Kühlaggregat gekoppelt ist, mit welchem temperiertes Medium, insbesondere Kühlmedium, in den Innenraum der Umhausung (12.1) leitbar ist.

3. Werkzeugmaschine nach Anspruch 2, **dadurch gekennzeichnet, dass** das Medium ein gasförmiges Medium ist.

4. Werkzeugmaschine nach Anspruch 1 oder 2, **dadurch gekennzeichnet, dass** die Temperiervorrichtung (12) wenigstens ein Temperatursensor zur Erfassung der Werkstücktemperatur und/oder der Temperatur in der Temperiervorrichtung (12) aufweist und/oder dass das Kühlaggregat Mittel zur Einstellung und/oder Messung der Temperatur des Mediums aufweist.

5. Werkzeugmaschine nach einem der Ansprüche 1 bis 4, **dadurch gekennzeichnet, dass** die Umhausung (12.1) der Temperiervorrichtung (12) eine umfangsseitig und oben geschlossene Wand aufweist und umfangsseitig mit einer Unterseite versehen ist.

6. Werkzeugmaschine nach einem der Ansprüche 1 bis 5, **dadurch gekennzeichnet, dass** die Umhausung (12.1) der Temperiervorrichtung (12) in der Art einer nach unten offenen Glocke ausgeführt ist.

7. Werkzeugmaschine nach einem der Ansprüche 1 bis 6, **dadurch gekennzeichnet, dass** die Umhausung (12.1) der Temperiervorrichtung (12) über das an dem Rüstplatz (9) auf einer Palette (10) positionierte Werkstück (W) mit ihrer Unterseite auf die Palette (10) aufsetzbar ist.

8. Werkzeugmaschine nach einem der Ansprüche 1 bis 7, **dadurch gekennzeichnet, dass** die Umhausung (12.1) der Temperiervorrichtung (12) an einer Linearführung (13) höhenverstellbar angeordnet ist und mit dieser über das auf dem Rüstplatz (9) positionierte Werkstück (W) fahrbar und auf der Palette (10) aufsetzbar ist.

9. Werkzeugmaschine nach einem der Ansprüche 1 bis 8, **dadurch gekennzeichnet, dass** die Temperiervorrichtung (12) mit einer Steuerung der Werkzeugmaschine (1) gekoppelt ist.

10. Werkzeugmaschine nach einem der Ansprüche 1 bis 9, **dadurch gekennzeichnet, dass** die Temperiervorrichtung (12) Anschlüsse für eine Stromversorgung, die Zuführung des temperierten Mediums bzw. Kühlmediums und eine Kopplung mit der Maschinensteuerung aufweist.

## Claims

1. A machine tool for precision machining of a workpiece (W), wherein the machine tool (1) has a setup location (9) for providing the workpiece (W) and a machining position (4) for machining the workpiece (W), and comprising handling means by means of which the workpiece (W) can be transferred from the setup location (9) to the machining position (4), **characterized in that** the machine tool (1) comprises in the region of the setup location (9) a tempering apparatus (12) with an enclosure (12.1), which encloses the workpiece (W) at least in sections, and that the tempering apparatus (12) comprises means for setting the temperature of the workpiece (W) to a predetermined temperature or temperature range.

2. A machine tool according to claim 1, **characterized in that** the tempering apparatus (12) is coupled to at least one cooling unit, by means of which tempered medium, in particular cooling medium, can be conducted into the interior of the enclosure (12.1).

3. A machine tool according to claim 2, **characterized in that** the medium is a gaseous medium.

4. A machine tool according to claim 1 or 2, **characterized in that** the tempering apparatus (12) has at least one temperature sensor for detecting the workpiece temperature and/or the temperature in the tempering apparatus (12), and/or that the cooling unit has means for setting and/or measuring the temperature of the medium.

5. A machine tool according to one of the claims 1 to 4, **characterized in that** the enclosure (12.1) of the tempering apparatus (12) has a wall closed on the circumferential side and at the top, and is provided on the circumferential side with an underside.

6. A machine tool according to one of the claims 1 to 5, **characterized in that** the enclosure (12.1) of the tempering apparatus (12) is designed in the manner of a downwardly open bell.

7. A machine tool according to one of the claims 1 to 6, **characterized in that** the enclosure (12.1) of the tempering apparatus (12) can be placed with its underside on the pallet (10) via the workpiece (W) positioned on the setup location (9) on a pallet (10).

8. A machine tool according to one of the claims 1 to 7, **characterized in that** the enclosure (12.1) of the tempering apparatus (12) is arranged in a height-adjustable manner on a linear guide (13) and can be moved therewith over the workpiece (W) positioned on the setup location (9) and can be placed on the pallet (10).

9. A machine tool according to one of the claims 1 to 8, **characterized in that** the tempering apparatus (12) is coupled to a control unit of the machine tool (1).

10. A machine tool according to one of the claims 1 to 9, **characterized in that** the tempering apparatus (12) has connections for a power supply, the supply of the tempered medium or cooling medium and a coupling with the machine control unit.

## Revendications

1. Machine-outil pour l'usinage de précision d'une pièce (W), laquelle machine-outil (1) présente un poste de préparation (9) pour la préparation de la pièce (W) et un poste d'usinage (4) pour l'usinage de la pièce (W), ainsi que des moyens de manutention avec lesquels la pièce (W) peut être transférée du poste de préparation (9) au poste d'usinage (4), **caractérisée en ce que** la machine-outil (1) présente dans la zone du poste de préparation (9) un dispositif de conditionnement thermique (12) avec une enceinte (12.1) qui entoure la pièce (W) au moins dans certaines zones et que le dispositif de conditionnement thermique (12) présente des moyens pour régler la température de la pièce (W) à une température prédéfinie ou dans une plage de température prédéfinie.

2. Machine-outil selon la revendication 1, **caractérisée en ce que** le dispositif de conditionnement thermique (12) est couplé à au moins un groupe réfrigérant avec lequel un milieu conditionné thermiquement, notamment un milieu réfrigérant, peut être introduit à l'intérieur de l'enceinte (12.1).

3. Machine-outil selon la revendication 2, **caractérisée en ce que** le milieu est un milieu gazeux.

4. Machine-outil selon la revendication 1 ou 2, **caractérisée en ce que** le dispositif de conditionnement thermique (12) présente au moins un capteur de température pour détecter la température de la pièce et/ou la température dans le dispositif de conditionnement thermique (12) et/ou que le groupe réfrigérant présente des moyens pour régler et/ou mesurer la température du milieu.

5. Machine-outil selon l'une des revendications 1 à 4, **caractérisée en ce que** l'enceinte (12.1) du dispositif de conditionnement thermique (12) présente une paroi fermée périphériquement et en haut et est pourvue périphériquement d'une face inférieure.

6. Machine-outil selon l'une des revendications 1 à 5, **caractérisée en ce que** l'enceinte (12.1) du dispositif de conditionnement thermique (12) est réalisée à la manière d'une cloche ouverte vers le bas.

7. Machine-outil selon l'une des revendications 1 à 6, **caractérisée en ce que** l'enceinte (12.1) du dispositif de conditionnement thermique (12) peut être posée sur la pièce (W) positionnée au poste de préparation (9) sur une palette (10), avec sa face inférieure sur la palette (10).

8. Machine-outil selon l'une des revendications 1 à 7, **caractérisée en ce que** l'enceinte (12.1) du dispositif de conditionnement thermique (12) est disposée de manière réglable en hauteur sur un guidage linéaire (13) et peut être déplacée avec celui-ci au-dessus de la pièce (W) positionnée au poste de préparation (9) et posée sur la palette (10).

9. Machine-outil selon l'une des revendications 1 à 8, **caractérisée en ce que** le dispositif de conditionnement thermique (12) est couplé à une commande de la machine-outil (1).

10. Machine-outil selon l'une des revendications 1 à 9, **caractérisée en ce que** le dispositif de conditionnement thermique (12) présente des raccords pour une alimentation électrique, l'amenée du milieu conditionné thermiquement, notamment du milieu réfrigérant, et un couplage avec la commande de la machine.
